# EUROPEAN PATENT APPLICATION

(11) **EP 4 501 823 A1**
(43) Date of publication of application: **05.02.2025**
(21) Application number: 23382796.3
(22) Date of filing: 31.07.2023
(51) Int. Cl.: B65G 59/10

(54) **SUPPORT UNIT FOR A DENESTING APPARATUS**

(71) Applicant: Borrell Soley, Josep, 17162 Bescano, Girona (ES); Bataller Quiñones, Joan, 17162 Bescano, Girona (ES)
(72) Inventor: Borrell Soley, Josep, 17162 Bescano, Girona (ES); Bataller Quiñones, Joan, 17162 Bescano, Girona (ES)
(74) Representative: Iglesias Monravá, José Mª

(57) **Abstract**

The present invention discloses a support unit (1), constituting part of a denesting apparatus, including a frame (2) defining a storage space, the storage space configured to host a stack of receptacles to be denested in the denesting apparatus along a stacking axis (S); the frame (2) including at least one engagement pad (3) in each of two opposed sides of the frame; each engagement pad (3) including a support surface (31) parallel to the stacking axis (S), facing the storage space and adjacent thereto, and an engagement portion (32) protruding from the support surface (31) within the storage space, so that the engagement pad (3) is suitable to contact a plurality of edges of receptacles of the stack of receptacles by the engagement portion (32), characterized in that the engagement portion (32) is composed of an elastomeric material, and the engagement portion (32) is a matrix of protruding flexible pins (320).

## Description

### TECHNICAL FIELD

The present disclosure is related to a denesting apparatus, in particular to a support unit constituting part of a denesting apparatus.

### BACKGROUND ART

Currently, a wide variety of foodstuff is made available to the consumer being deposited in trays. During filling of the trays in an industrial installation, the trays are inserted/loaded into a denesting apparatus which will dispend trays onto a conveyor belt after which the empty trays are transported to a filling station, filled with the desired content and finally sealed, labelled and removed from the production facility. Trays are usually arranged in a denesting apparatus where a stack of trays are rapidly dispensed from the bottom of the stack onto the conveyor belt such that gravity will aid in the dispensing of trays.

In the industry, several solutions have been provided to conveniently support and individually dispense the trays from the corresponding stack.

For instance, patent application EP3744666 discloses a stacking device for stacking trays from a stack of trays comprising a vertical guide for receiving a stack of trays, a separating device which is configured for the individual destacking of the respective bottom tray of a tray stack received in the vertical guide and a relief device with a holding element and a drive device, which is configured to move the holding element between a holding position in which the holding element is part of a stack of trays accommodated in the vertical guide, and to move to a release position in which the holding element releases the stack of trays, characterized in that the path of travel of the holding element between the holding position and the release position is defined by a link guide or by a wedge guide.

Patent application WO20169165 discloses a support unit, constituting part of a denesting apparatus, said support unit supporting a stack of trays, cups or other receptacles to be denested in the denesting apparatus, such that trays, cups or other receptacles are dispensed one by one from a lower part of the stack, where said support unit comprises two vertical guides arranged in close proximity to the stack on opposing sides of said stack, and where on each vertical guide two or more engagement pads are provided, which engagement pads are suitable to simultaneously contact a plurality of edges of the trays, cups or other receptacles to be denested, in a sequential manner, such that at least one engagement pad on either side is in contact with a plurality of edges of the trays, cups or other receptacles to be denested at a time. Moreover, the engagement pads are advantageously provided with a resilient layer such that the resilient pad upon contact with the edge is slightly deformed and thereby handles the edge of the tray and thereby the tray itself in a gentle manner. The surface of the engagement pads intended for engagement with the stack of trays, cups or other receptacles to be denested is shaped corresponding to the edge of the trays, cups or other receptacles to be denested.

Patent application US2019023503A1 discloses a part feeding apparatus comprising: a guide to guide stacked parts stacked in a height direction along a height of the part feeding apparatus; a separator configured to pick up a bottommost part located at a bottom of the stacked parts in the height direction; and a lift mechanism configured to lift the stacked parts except for at least the bottommost part. To support the lids of the remaining claws, pinching claws might be provided. The pinching claws may include an uneven shape on a contact surface with the lid, the material of the pinching claw not especially limited, being, for example, a rubber material, a resin material or a metal material.

However, there are many aspects to the denesting of trays which need to be addressed and have not been completely solved in the prior art. First, the development of trays is towards trays made from an ever thinner material and the distance between each tray in a stack is ever decreasing. Second, the distance between trays in a stack is usually not even. Third, the edge of the trays are not perfectly even. Fourth, the larger the stack of trays is, the more difficult for the stack to be aligned. These at least four aspects makes tray denesting a challenge, in particular with regards to the optimal support of the trays that leads to an optimal individual denesting of them.

The present disclosure attempts to solve the problems above mentioned.

### DESCRIPTION OF THE INVENTION

In order to address one or more of the foregoing problems, one aspect of the present disclosure relates to a support unit, constituting part of a denesting apparatus, that includes includes a frame defining a storage space, the storage space configured to host a stack of receptacles to be denested in the denesting apparatus along a stacking axis; the frame including at least one engagement pad in each of two opposed sides of the frame; each engagement pad including a support surface parallel to the stacking axis, facing the storage space and adjacent thereto, and an engagement portion protruding from the support surface within the storage space, so that the engagement pad is suitable to contact a plurality of edges of receptacles of the stack of receptacles by the engagement portion, characterized in that the engagement portion is composed of an elastomeric material, and the engagement portion is a matrix of protruding flexible pins.

In the support unit as disclosed herein, two engagement pads may be provided in each of the opposed sides of the frame.

The engagement pad in the support unit may be configured to simultaneously contact at least two of the edges of the receptacles to be denested.

Moreover, the engagement pad as disclosed herein may be composed of an elastomeric material. The elastomeric material may preferably be a silicone, more preferably platinum cured silicone. In addition, the elastomeric material may have a Shore A hardness of between 20 and 80, more preferably between 30 and 60.

The flexible pins as disclosed in the present disclosure may be preferably cylindrical or conical. Other geometries are envisaged, such as that of a prism.

Moreover, the matrix of protruding flexible pins may have a density of between 10 and 30 protruding flexible pins per cm².

Moreover, the support surface of the engagement pad has preferably a surface of between 5 and 30 cm². The support surface may preferentially have a rectangular shape, but other shapes such as circular or oval may also be applied.

The protruding flexible pins are preferably disposed in aligned rows in the matrix. The matrix of protruding flexible pins preferably comprises at least two rows of flexible protruding pins.

In a preferred configuration, the stacking axis in the support unit is vertical. However, other configurations are envisaged, in which the stacking axis is not vertical, but tilted. An angle of up to 30° with respect to the vertical configuration is also disclosed herein.

In a second aspect, the present disclosure is related to a denesting apparatus comprising the support unit as disclosed herein.

In a third aspect, the present disclosure is related to a method to denest a stack of receptacles comprising the support unit as disclosed herein.

### BRIEF DESCRIPTION OF THE FIGURES

The foregoing and other advantages and features will be more fully understood from the following detailed description of an embodiment with reference to the accompanying drawings, to be taken in an illustrative and non-limitative manner, in which:
FIG. 1 schematically depicts a perspective view of an embodiment of the support unit herein disclosed.
FIG. 2 schematically depicts a plant view of an embodiment of the support unit herein disclosed.
FIG. 3 schematically depicts perspective view of an embodiment of the engagement pad herein disclosed.

### DETAILED DESCRIPTION OF THE INVENTION

In the present disclosure, the terms "denesting apparatus", "tray denester" or "tray denesting apparatus" are equivalent and refer to an apparatus configured to denest receptacles, typically trays.

In the present disclosure, the term "receptacle" is a generic term that includes, among other containers, trays and cups. In general, a receptacle is a container that can be stacked.

In the present disclosure, the term "pin" refers to a filament-like or a thread-like element. This element preferably has a length-to-diameter ratio of about the same order of magnitude.

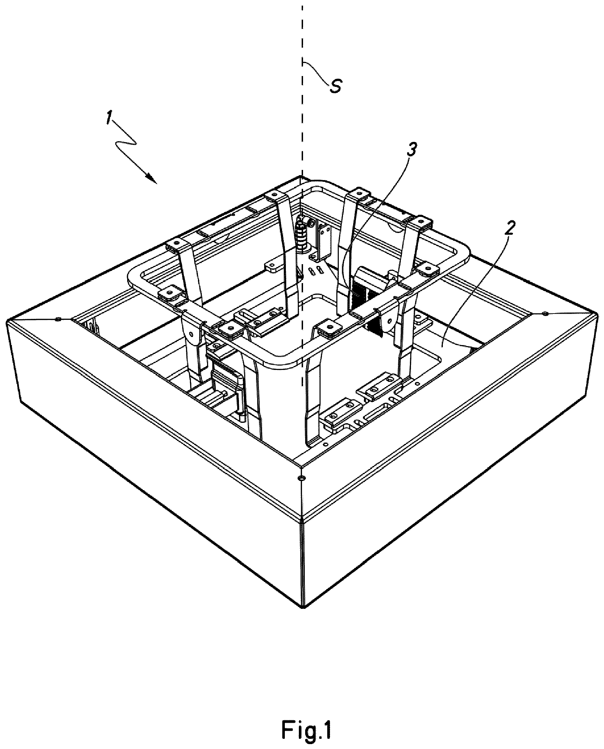

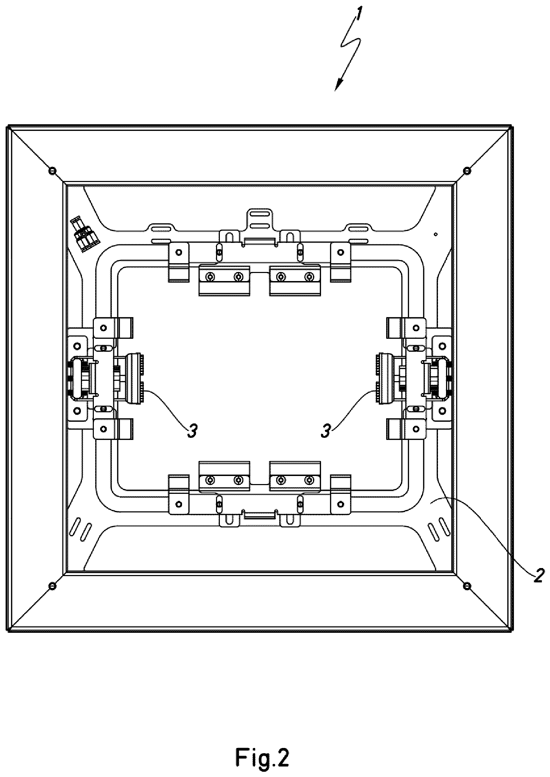

An embodiment of the support unit as disclosed in the present invention is depicted in FIG. 1 and FIG. 2. The support unit 1 is a constituting part of a denesting apparauts and comprises a frame 2 that defines a storage space configured to host a stack of repectacles along a stacking axis S. The frame 2 includes, in this particular embodiment shown in both FIG. 1 and FIG.2, two engagement pads 3 facing the storage space and adjacent thereto, i.e., a total of four engagement pads 3.

In general, one engagement pad 3 in each of the two opposing sides of the frame 2 facing the storage space are enough to correctly support their support function.

The support unit 1 as disclosed in the present invention comprise all the elements needed so that the receptacles in the stack of receptacles are individually denested.

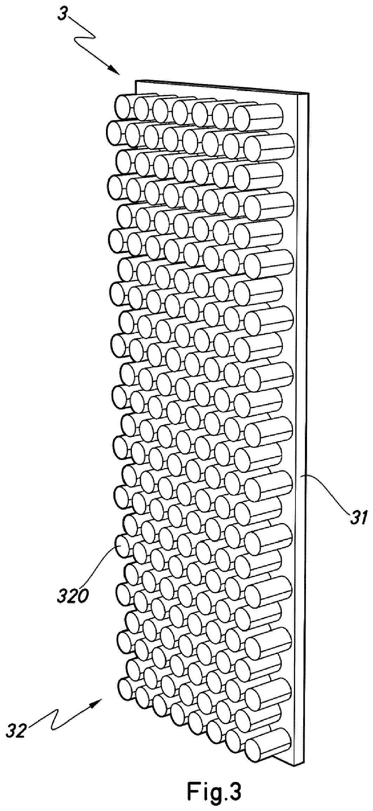

FIG. 3 shows an embodiment of the engagement pad as disclosed in the present invention. The engagement pad 3 includes a support surface 31 parallel to the stacking axis S and an engagement portion 32 protruding from the support surface 31. The engagement portion 32 protrudes within the storage space, so that the engagement pad 3 may contact a plurality of edges of receptacles in the stack receptacles by the engagement portion 32. The engagement portion 32 is a matrix of protruding flexible pins 320. In the particular embodiment shown in FIG. 3, the protruding flexible pins 320 are cylindrical.

The engagement pads 3 according to the present disclosure have the advantage of adapting to any type of receptacle stacks, independently of their material, the separation between receptacles and the irregularities of the edges of the receptacles, provided that the engagement portion 32 of the pads are composed of an elastomeric material and is a matrix of protruding flexible pins 320. The inventors have found that an engagement portion 32 made of a non-elastomeric material increases the errors in the process of denesting a stack of receptacles. These errors may include denesting more than one receptacle at a time,

The protruding flexible pins 320 have the ability of completely adapting to the geometry of the stack of receptacles, without being prejudicial the material of the receptacles (plastic, cardboard, etc.), the thickness of the receptacles, the distance between receptacles, the evenness of the distance between receptacles, and/or the irregularities of the edges of the receptacles.

As disclosed hereinabove, the geometry of the flexible protruding pins 320 is preferably cylindrical, but other geometries are envisaged, such as conical, prism or any other. The flexible protruding pins 320 are configured to be adaptable to the stack of receptacles.

The protruding flexible pins 320 in the matrix of the engagement pad 3 are preferably aligned in rows. There might be an offset between consecutive rows.

The hardness of the elastomeric material in the engagement portion 32 can be tuned. The higher the hardness, less reactivity and adaptability of the protruding flexible pins 320. Therefore, a Shore A hardness of between 20 and 80 is preferred, being between 30 and 60 more preferred. However, a high hardness of the protruding flexible pins 320 can be compensated by decreasing the diameter and/or the section of the protruding flexible pins 320 to achieve optimum denesting results.

Two rows of protruding flexible pins 320 in the matrix of the engagement portion 32 are needed to properly perform the support function in a denesting apparatus according to the present disclosure.

## Claims

1. Support unit (1), constituting part of a denesting apparatus, the support unit (1) including a frame (2) defining a storage space, the storage space configured to host a stack of receptacles to be denested in the denesting apparatus along a stacking axis (S); the frame (2) including at least one engagement pad (3) in each of two opposed sides of the frame; each engagement pad (3) including a support surface (31) parallel to the stacking axis (S), facing the storage space and adjacent thereto, and an engagement portion (32) protruding from the support surface (31) within the storage space, so that the engagement pad (3) is suitable to contact a plurality of edges of receptacles of the stack of receptacles by the engagement portion (32),
**characterized in that**
the engagement portion (32) is composed of an elastomeric material, and the engagement portion (32) is a matrix of protruding flexible pins (320).

2. The support unit according to claim 1, wherein two engagement pads (3) are provided in each of the opposed sides of the frame (2).

3. The support unit according to claims 1 or 2, wherein the engagement pad (3) is configured to simultaneously contact at least two of the edges of the receptacles to be denested.

4. The support unit according to any one of claims 1 to 3, wherein the engagement pad (3) is composed of an elastomeric material.

5. The support unit according to any one of claims 1 to 4, wherein the elastomeric material is a silicone.

6. The support unit according to claim 5, wherein the silicone is platinum cured silicone.

7. The support unit according to any one of claims 1 to 6, wherein the elastomeric material has a Shore A hardness of between 20 and 80.

8. The support unit according to any one of claims 1 to 7, wherein the flexible pins (320) are cylindrical or conical.

9. The support unit according to any one of claims 1 to 8, wherein the matrix of protruding flexible pins (320) has a density of between 10 and 30 protruding flexible pins (320) per cm².

10. The support unit according to any one of claims 1 to 9, wherein the support surface (31) of the engagement pad (3) has a surface of between 5 and 30 cm².

11. The support unit according to any one of claims 1 to 10, wherein the protruding flexible pins (320) in the matrix are disposed in aligned rows.

12. The support unit according to any one of claims 1 to 11, wherein the matrix of protruding flexible pins (320) comprises at least two rows of protruding flexible pins (320).

13. The support unit according to any one of claims 1 to 12, wherein the stacking axis (S) is vertical.

14. A denesting apparatus comprising the support unit (1) as defined in any one of claims 1 to 13.

15. A method to denest a stack of receptacles comprising the support unit (1) as defined in any one of claims 1 to 13.
